# EUROPEAN PATENT APPLICATION

(11) **EP 2 063 307 A2**
(43) Date of publication of application: **27.05.2009**
(21) Application number: 08163477.6
(22) Date of filing: 02.09.2008
(51) Int. Cl.: G02B 21/24

(54) **An improved splitter**

(30) Priority: 14.09.2007 PK 109807
(71) Applicant: Iqbal, Zafar, Society Saddar Hyderabad (PK)
(72) Inventor: Iqbal, Zafar, Society Saddar Hyderabad (PK)
(74) Representative: Kihn, Henri

(57) **Abstract**

An optical device is designed which set aside real technology in minor and mega dimensions, liberating output of skill inadequacies, inherent in human nature and structure of machine, by providing advance guidance in real time and space, through universally readable parameters for anticipation and prediction to achieve only perfect state of art preconceived end results.

## Description

### Background of the Invention :

Science (laws) and technology (means) do not work concomitantly neither they show homogeneity nor complementarity, world is facing century old paradox that if they follow science in digital or linear mode (where the world follow previous: step) results are faulty and if they follow science and technology in parallel or analogue mode (where a person skilled in the art improvise every step according to the situation) science and technology show faults.

To disrupt this dichotomy, that is, the deficiency of digital system and efficiency of analogue system should be properly measured and standardized against by creating a universal paradigm to transcend both mentioned systems.

In order to overcome the deficiency a new system has been designed with the help of an optical device, which is called as "Splitter" in this invention that operates on universal paradigm to transcend human objectivity with accuracy and human subjectively by speed.

There is no definition of quantum discovery, it is a fortunate accident in the world of universal order and harmony, where status quo of science and technology is disrupted, and neither there is any simile nor pre-existing sequence to explain it. It is an apocalyptic shift of operative force from one landscape (physics) to another landscape (metaphysics).

First time in the history of the world that a paradigm operating in real time and space is meticulously adjusted within the existing system of relative time and space to control and change existing paradox of time and space of existing technology, by providing permanent axis and advance view of guiding parameters to anchor oncoming changes under universally readable prescribed limits. In the present system (splitter) image observed (object) and image retrieved (in computer) show total "equivalence" in analysis and operative laws because magnification is a part of normal vision, what was invisible before is visible now or our vision is extended and expanded under the strict jacket of real time and space, the person can use his normal mental and manual dexterity in new world without any orientation and fear. Because of the extended vision provides tactical overview of ongoing operation without or beyond subject/object dichotomy. The system is based on orthogonality is:
i. SIMPLE: where functions overwhelm the aesthetics and size of the tool.
ii. HUMAN: dimensions of image totally approximate human dynamics.
iii. UNIVERSAL: blessings of science in the form of "speed" and "ease" are provided at low cost in small size.
iv. FUTURISTIC: it extends accompanying technology to operate in future time zone.

There is total ergonomics; in fact the world shift from unfamiliar parameters to human familiar parameters. The world operates in error free zone and is always at safe and easy location with simple options.

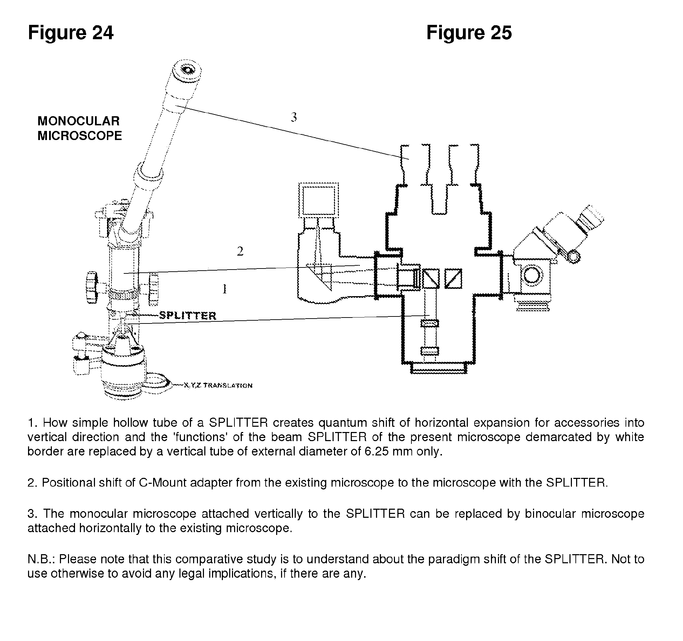

The reason behind designing SPLITTER is to enhance and galvanize selected technologies to transcend and compensate human and machine inadequacies and

eventually to create a qualitative leap in a world of precision and speed by merging machine technology and human intelligence. "Reference: FIG No. 24"

Because man can perceive and understand only two dimensions and operates in one direction, Orthogonality is chosen as universal paradigm for SPLITTER which also operates in one direction and perceives or retrieve images in two dimensions. There is a metaphysical yearning in every human being to evaluate total potentiality of an object situation before venturing into practical world with predictable time and space to transcend individual prerogatives through "visible predictability" and "error free landscape".

The true measure of human freedom is that how much he is living in scrutinized and measured world, and how much access he has in un-scrutinized and unmeasured world.

SPLITTER based upon universal paradigm of Orthogonality, secures objective end by providing reliable and replicable quantitative dimensions of an object and the subjective end is secured by computer to change quantitative dimensions into qualitative limitations or operative directions through digital analysis and synthesis (algorithm).

Thus when coupled with selected technologies (here microscope) SPLITTER creates true bidirectionality to capture or retrieve subtle dimensions of an object or transfix an object in total configuration to visualize in advance antecedent and consequent changes simultaneously there is no difference between before and after, you are critically poised in present. The cause creates an effect; the effect influences the cause, bringing first time "visible predictability" and "error free zones" in the world of science and technology.

The questions of advance guidance in real time and space and liberating output from skill adequacies are also explicitly and comprehensively explained under the title of "Orthogonality" in the text, examples and diagrams.

### EMBODIMENT:

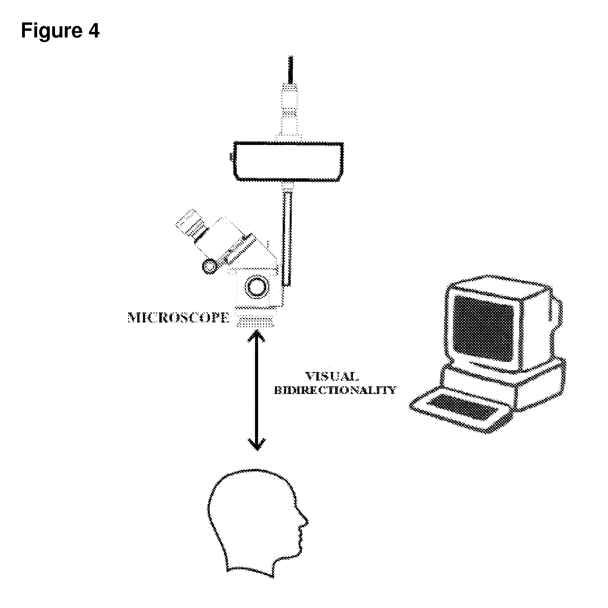

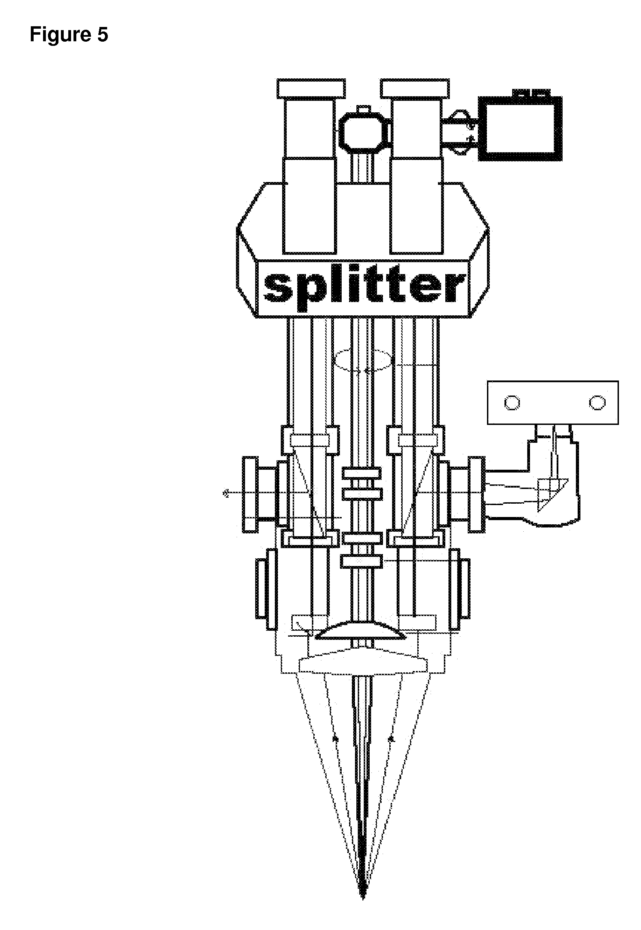

This part of the document describes in detail how the spirit of an idea, principle or paradigm is harnessed in a working system.
1. Straight line is the prime metaphysical foundation of consciousness and cosmos. It is the straight line which unfolds the innate potential of mind and matter.
2. Straight line in the form of universal vision on one end unfolds the total identification of an object and on the other end total visual dexterity of man as if mind and matter are timed (TIME) and tuned (SPACE) to straight line (COSMIC CONSTANT).
3. Total sanctity of straight line is incarnated and incorporated in orthogonality. It is the orthogonality that extends and expands straight line in proportionality and absolute symmetry without affecting the inherent potentiality of straight line taken as a prime dimension.
4. Orthogonality is that axiomatic and universal paradigm which truly imitates, emulates, and even excels total human potential singularly and collectively in predetermined order of:
   I. Visual dexterity
   II. Mental dexterity
   III. Manual dexterity
      I) For visual dexterity orthogonality provides normal and natural extension of human vision in un-manifested (invisible) world in length and breadth through pure optical resolution.
      II) For mental dexterity orthogonality provides normal and natural world of avariance through universal vision line in the form of a-priori, an ought to operate in a world of absolute necessities and definite possibilities
      III) For manual dexterity orthogonality provides free excess of measured and scrutinized human familiar operative parameters, to choose own steps of sequence or operative line.
   In nutshell, if line of vision provides isometric vision of an object mind accepts it as if it was expected and human hands carry out freely accessible changes of new-conceived world.
5. PROBLEMS OF PRESENT WORLD OF SCIENCE AND TECHNOLOGY CULMINATE IN THREE CATEGORIES:
   I) At the height of the skill it is very difficult to manipulate with micro precision in small space.
   II) At the height of experience finer and sharp manual skills are invariably not present.
   III) In-spite of all technical strides in the field of science and technology, we have not come to that stage where we can claim to have single solution of a single problem or world of "replicable objectivity". Still we are trapped in the world of "assistance" where human prerogatives reign supreme hence there are many human approaches for a single problem.
   To emerge from the quagmire of world of "assistance" into self sufficient, self assessing world of "guidance" with human familiar parameters to achieve explicit, explicable and replicable objectivity. We have interfaced timeless image of object with timeless analysis of a computer through orthogonality.
   This phenomenal interface is possible with a hollow tube of "SPLITTER" that personifies and embodies the very spirit of "orthogonality".
6. Orthogonal is used when discussing vectors or coordinates of geometry.
7. In two dimensional Euclidean spaces, 2 spaces are orthogonal if their dot product is zero that is they make an angle of 90 degree or pi/2 radians. Because mutual perpendiculars are in the realm of non association.
8. Orthogonality guarantees that modifying the technical effect produced by a component of a system neither creates nor propagates side effects to the other component of that system.
9. Orthogonality operates in three stages:
   I. When both coordinates are variables;
   II. When one coordinate is a-variable and the other is variable; and
   III.When both coordinates are a-variables.
   In SPLITTER both coordinates are a-variables with a difference that primary dimension is time (hollow tube) and the secondary dimension which is known as orthogonal is space a-variable i.e. providing critical space limits, timeless image or subtle dimensions for total identification.
10. Orthogonality streamlines equitability and empathy between human nature and technology.
   The basic dynamics of orthogonality is not affected by "time", "space", and "form" constraints. It is unequivocal and unique open ended system of infinite/definite possibilities, because it expands as isometric seamless world in prescribed space and direction to create whole new world of observations, assessments, verifications, innovations and productions in minor and mega dimensions.
11. Up till now science and technology misguided us that means are optional and results are obligatory to prove methodology surpasses norms of Divine creation, laws of nature, human rationality and cosmic causality, when orthogonality (splitter) proves that means have absolute superiority over the results, because means or laws (science) which not only teach us about the status and measure of methodology (technology) but also contain technology under prescribed limits to prove the forgotten truth, that "means" justify "ends".
12. BACKGROUND OF ORTHOGONALITY:
   I. Historically from time immemorial unconsciously human dexterities show synergistic and individual excellence in orthogonal background. The way targets were erected for archery and practice shootings.
   II. After the introduction of photography (1836 France) orthogonal space was consciously used for identification of objects and a/symmetry of human face for squint and plastic surgery.
   III.More recently (in 1980, Rowsey and colleagues) orthogonality was used to take corneal photographs for quantitative and qualitative analysis as shown in figure No. 4.
   Based upon differences between images of "splitter" and microscope. (See Fig # 20 along with the description of respective images).

### EQUATIONS ARE VERY SIMPLE

In the present world of "assistance" of virtual/augmented realities, because of explicit dichotomy of subject and object.
"End" justifies the "means".

In the orthogonal world "guidance" transcends subject/object dichotomy to prove "Means" justifies the "end".

### MEASURE OF QUANTUM TECHNOLOGY:

Now the question arises as how far this technology has pushed back on put aside the present technology.

What is new level of mental compatibility between human sensitivity and empirical activity?
How much it rarefies the existing technology?
What are the new horizons available to human vision?
Why this innovation is called "Splitter", because it splits duality and separates:
i) Manifested world from un-manifested world.
ii) Real world from relative world.
iii) Temporal world (relative time and space) from a temporal world (real time arid space).
iv) continuity from discontinuity.
v) Seamless world from disjointed world.
vi) Metaphysics from physics.
vii) Quantitative world from qualitative world.
viii) Substance from the essence.
ix) Subjectivity from objectivity.

### Technical Specifications:

As far as the Technical Specifications of Splitter are concerned, we submit as follows:
- PURPOSE:: Ultimate guidance with compensating inadequacies of mind and machine.
- MODE:: Optics
- INPUT:: Visuals (2-D/3-D Images) for total identification.
- FUNCTION:: Digital / Analogue / Visual Bidirectionality for total identification and error free operation. Unbroken continuity of functionality is provided by orthogonality because of bidirectionality since the man can blink but not the system.

- OUTPUT:: Universal operative directions based upon qualitative analysis readable at all times.
- APPLICATIONS:: Diamond cutting, robotics, optics, lasers, microelectronics, micromechanics and designing evaluation and construction in any field

### EXAMPLE

1) Raw diamond is first analyzed quantitatively and qualitatively in universally readable parameters.
2) The device suggests numerous options of best valued products
3) During the process of cutting whenever a device is consulted it suggests the best possible course available at that time.

The conception, design and operation of SPLITTER are based upon three universal paradigms:
1 Straight line
2. Orthogonality
3. Resolution

The designing of splitter is based upon metaphysical principle of identification that there is only one direction (line) of universal vision where identification is not different from the object and the direction of the universal vision inherit back all total dimensions of an object to generate totally identical image which shows absolute equivalence in identification analysis and application of operative laws. Hence, places either close or far, can be clipped electronically for real time observation, analysis and guidance for the universal image. Science is successful in retrieving this image in unipolar mode on orthogonal paradigm as evident by figure IV but once the surgeon starts operation he loses qualitative analysis and uses its own experience to complete the job. When Splitter changes this unipolar mode into "dynamic bipolarity" between object and image to have complete analysis of every step in advance to be totally free from objective perceptions and subjective evaluations.

### FORCES WHICH GUIDE AND GUARD "UNIVERSAL LINE OF VISION"

I.Straight line
II. Symmetry of cosmic time and space
III.Orthogonality
IV. X, Y, Z, Coordinates
V. Resolution

**I. Straight line which symbolizes the most fundamental metaphysics:**
   Optical depth of human vision is more profound then optical depth of sunlight. We can use human vision in "skeet" firing which is not a game of chance but very much a sport of choice similarly we can use vertical straight line to construct a "sundial" anywhere in cosmic world.
**II. Symmetry or homogeneity of cosmic time and space:**
   In cosmic world time and space are two absolute entities which can restrict or modify operative circumstances. Every physical law in every physical domain contains explicitly or implicitly space time relationships. Explicitly time and space exhibit homogeneity to conserve our energies and to preserve our scientific heritage. Because of time and space homogeneity physical phenomenon is always the same; we can repeat Archimedes principle of buoyancy anywhere any time.
**III. Orthogonality:**
   Orthogonal is a simple adjective which is a generalization of "perpendicular", means right angle. In Greek "Orthos" means "straight". Straight line still remains primary dimension for core application and the second dimension which is added perpendicular to it is called orthogonal, Orthogonality is commonly used in:
      a. Taking passport photograph for maximum identification;
      b. in scanners where light moves orthogonally;
      c. in designing power transmissions of vehicles;
      d. in figure IV, surgeon is examining orthogonally taken photographs of human cornea for qualitative analysis before surgery.
   In the matrix of Orthogonality, qualities of observer and observed are preserved and are replicable.
   Orthogonality provides ideal and pure relationships between independent (vertical) and dependent (horizontal) invariables.
   Orthogonality is one of the most important properties that can help make even complex designs compact. **COMPACTNESS:**
   Compactness is the property of orthogonal design, which provides human familiar parameters to easily fit inside his head. We do not need a manual to operate, nothing obtrude between human mind and his work.
   Orthogonality is a relationship where input is always equal to output or human pace is equal to event pace. It is one to one relationship, there is one and only one way to change / control / operate. There is an excellent discussion in pragmatic programmer by Hunt Thomas. Where they point out, Orthogonality reduces test and development time. There are few combinations to test if systems break down. Orthogonal code is more easily replaced without disturbing the rest of the system.
   In SPLITTER time and space are used orthogonally, where prime dimension is time and orthogonal dimension is space. To homogenize time and space into holistic "whole" to create world of zero tolerance (Heisenberg?) while in "whole" we do not need a single space dimension to construct it, nor one time duration to complete it. Orthogonality is incorporated in complimentary tool with ultimate and fundamental universal forces i.e. TIME AND SPACE.
   In homogeneity of time and space (whole), time is "spaced" and space is "timed" One is measure of other similar to cosmic space time homogeneity, To homogenize time and space is beyond human intellectual package, it is a pre rational world only computers are equipped to construct and analyze this "whole" and to guide about ultimate operative directions to bring about qualitative changes.
   Example: changing corneal refractive power.
   Total demarcation of operating targets for which we are presently using workstations fed by CAT scan and MIR systems to display three orthogonal views of a patient. Each orthogonal view is represented in two space dimensions and three x, y, z coordinates as evident from attached literature, titled as "A Precision Localiser to Enhance Accuracy in Image-Guided Surgery".
**IV. X, Y. Z COORD1NATES:**
   Refer to "EYEMAP" to understand X, Y, Z alignment.
**V. RESOLUTION:**
   Present world of science and technology is nothing but trained and organized common sense. If any thing completely fits in or goes against common sense is almost certainly not science. To build scientific edifice is to go beyond existing thought. Any innovation which disrupts the status quo is very difficult to put in words. The reason for "Ample notional considerations" is simply that currently no comparable instrument exists in world market to explain "SPLITTER". Hence, to describe new technology you are left with no choice but to use new syntax and new terminology. The only way to confirm is to repeat it or observe it. The real dichotomy between the existing science and SPLITTER is "image" to science everything is sacred which can be measured in 'figure I', resolution, magnification and distortion of image in time and space are shown. There is no way to subtract or isolate the magnification from time and space and resolution from magnification. Resolution being the real essence of the total complex. This complex of resolution magnification and time and space has created indefinable difference and distance between observer and objectivity and subjectivity. When image generated by SPLITTER is based upon Orthogonality guarded on one end by straight line and the other end by X, Y, Z coordinates comprises of three timeless components "compact in nature".
      1 Real time and space are enfolded in magnification.
      2. Magnification provides real horizontal dimension isometrically proportional to object as a base or foundation.
      3. Resolution is created as symmetrical pyramid in pure vertical dimension as shown in figure XVI. Thus SPLITTER establishes its own work station inside the existing system (Microscope) to operate in two time zones the higher time zone is far advanced in pure analysis and synthesis and provides ultimate operative directions depending upon speed of video camera and computer to:
      a. create true bipolar world of real time and space (Metaphysics) in the centre of the world of relative time and space (Physics).
      b. Achieve visible end results with predictable time and space.
      c. Provide universal humanly familiar readable parameters of total reality (compactness) to filter out errors of mind and machine.
      d. Generates total reality in cyber space for total identification and manipulation in six dimensions and three X, Y, Z coordinates.
         If image is the criterion there is no comparison between the image output of SPLITTER and that of microscope (here used as a prior art).

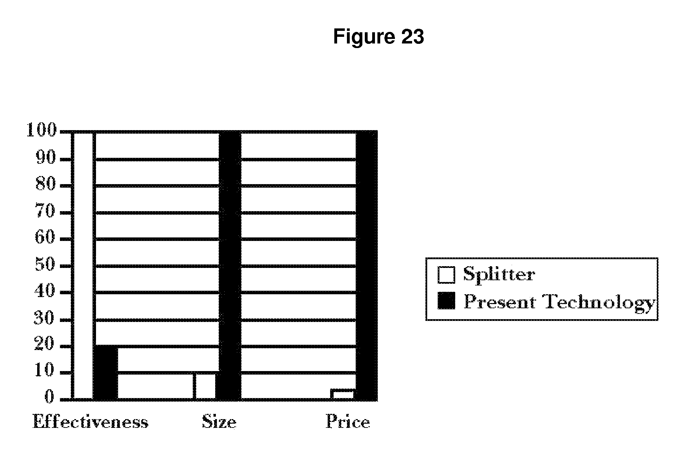

If magnification is the linear comparison of image with object, image is absolutely proportional in dimensions on both sides of object in SPLITTER because it operates in the centre of microscope. Thus when we increase or decrease magnification, image of object remains in the centre of monitor. When in microscope outlets for image is indirect and laterale (FIG No. 23), there is disproportional relationship between object and its image, when increase or decrease magnification image of the object moves eccentrically, reducing the pure vertical pyramidal development of resolution. Eventually we require a bigger aperture to capture this image, readjustment of microscope to bring image back in the centre of monitor and it is impossible to construct a "whole" for total analysis on this image.

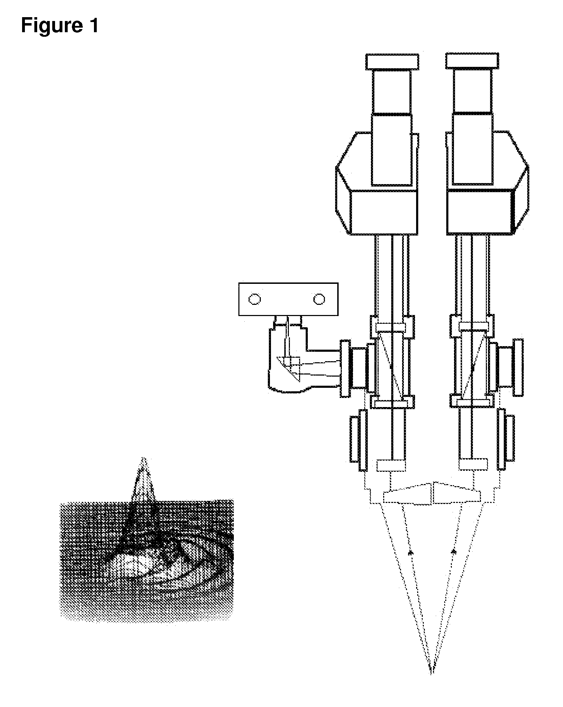

As in mathematics 2 + 2 is 'yes' not '4' because it is an axiomatic impersonal truth above and beyond the human life, which you cannot defy but to use it as turning point similarly, in geometry Euclidean's two dimensional image generated by orthogonal paradigm is immutable permanent, true, infinite, real and total. If you compare images generated b SPLITTER and microscope (FIG # 20) because of pure resolution which is twice in height then the image of the microscope (where true resolution is totally obscured, compare figure 1 with figure XVI) the extra height in vertical dimension reveals the un-manifested world which provide us the advanced view with absolute and transparent demarcations for visible predictability (visible future) and error free zones for safe manipulations to compensate inadequacies of a machine and ambiguities of human mind. If you use a video camera twice the human visual speed (24 frames per second) it is left to every ones fertile imagination that how much real time will accumulate at every passing "seconds".

Besides economy, aesthetics and human ergonomics, microscopes are designed on the paradigm of average inter papillary distance of human eyes the choice of 4.25mm (internal diameter of "SPLITTER") was not based on any scientific grounds or free will, it was an absolute pre-destination, because only 7mm safe zone was available without disturbing the external and internal configurations and functional dynamics of microscope that include illumination and magnification with the exception that separate magnification chamber (please see figure VI and VII) is designed in the centre below the tube of SPLITTER. Curiously enough when a tube of smaller diameter was tried no change in quality of image was observed. Hollow tube provides all mechanical functions to support and bear the weight of accessories protect the image of orthogonality from disturbance of microscope illumination protect surgeons eyes if tube is used for laser application

| **QUALITY OF IMAGE** | |
|---|---|
| No beam splitter is required hence surgeon's view is not interrupted and crisp image is available at low illumination. | Image is not crisp because of its division between surgeon and video camera through beam splitter. See Fig # 20 and Fig # 23 |

| **CENTRALITY OF IMAGE** | |
|---|---|
| Image remains in the centre when you change the magnification. | Image moves eccentrically when you increase or decrease magnification. |

| **GUIDANCE OF IMAGE** | |
|---|---|
| Image of SPLITTER is explicit representation of orthogonal paradigm (compare image of SPLITTER with Figure No. 2) here symmetrical magnification is anchored at right angle to isometric resolution. | |
| see fig # 21 and 22 | |
| This image will provide complete topographical identification for computer, observer, there (where operation is taking place) or far with electronic co presence which is only possible with orthogonal "whole" to independently analyze, search, evaluate and guide operation from remote place. | Image cannot provide real guidance for planning operative strategies. Available resolution in microscope is not sufficient to transcend from a spatiotemporal world to timeless a temporal world that is un-manifested world which is direct isometric extension in length corresponding to resolution of SPLITTER and prime dimension of orthogonality and proportional expansion in breadth of un-manifested world corresponding to magnification of SPLITTER and orthogonal dimension of orthogonality. |

X, Y, Z translations are the integral part of every modern microscope. Adding two more dimensions of orthogonality to exploit totally new world of resolution, five dimensions first time in the history are available in universal paradigm to operate in real time and space. The way "straight line" symbolizes the greatest cosmic metaphysics. Geometry of metaphysics is projected in the form of orthogonality represented by Splitter's tube as a leading edge. Because orthogonality helps us to operate in real time and space we have all the time at our disposal to slow down operative process in ratio example 1:1, 1:5, 1:10 and so on to match our dexterities, experience, fear right/left hand preferences when we are faced to deal a situation of micro precision in small spaces.

Superlatives aside it is felt that the breathing slot available in the microscope is first time animated by "SPLITTER" hence that slot should be protected by the name of "SPLITTER".

To conclude in simple words small things are chased, average things are accidentally found, but rare things are discovered when nature is on your side to disrupt status quo, which always reveals in future time order. When you try to understand the rare discovery you follow reverse time order. This is where comes the prior art. This reverse journey is always bumpy and creates apprehensions and reservations in everybody's mind, when you try to explain your achievements in simple words.

There is a wide difference when you communicate the truth and when you construct it.

**No doubt resolution and magnification are the integral part of each other but in the realm of analysis and ultimate guidance magnification has no comparison with resolution.**

| **QUALITIES OF IMAGE** | |
|---|---|
| GENERATION OF IMAGE | |
| (refer FIG # 20) | |
| SPLITTER | MICROSCOPE |
| Image generated by SPLITTER is based upon straight line of orthogonality. | Image generated by microscope depends upon non-orthogonal dimensions. Here time and space follow diverging path. As the image |
| | |
| Here time and space follow converging path, they are synthesized and homogenized in magnification. | ascends it recedes in space and concedes in time and everything undergoes juxtaposition (side by side) in horizontal direction. Heterogeneous |
| | |
| Magnification is symmetrical, concentric, proportional and isometric, with vertical cone of resolution. | forces of time and space create asymmetrical, eccentric and disproportional magnification known as lateralization eventually arresting resolution of image configuration |

| **CAPTURING OF IMAGE** | |
|---|---|
| Very small aperture of C-Mount is required to capture this image because of pointed and conical configuration of image resolution. | As evident from the size of the image you require larger aperture and higher illumination to capture it. |

It appears as if orthogonal paradigm generates an orthogonal image of primary resolution and secondary magnification and non-orthogonal paradigm generates non-orthogonal complex of resolution and magnification. This shows that there is a remarkable resemblance and similarity between operative geometries of orthogonal paradigm and its isometric production of resolution and magnification of an image in the form of inverted 'T' configuration.

The sole purpose of C-Mount adopter is to link simple video tube with microscope. In fact by adding C-Mount to video tube it becomes a video camera with built-in aperture adjuster to control the quality of image and light.

Certainly head of the SPLITTER accommodates all accessories because SPLITTER is designed to link commonly available C-Mount adapter but it provides timeless image through a hollow tube (timeless mediums) never seen before. If attached to a laser, SPLITTER provides straight uninterrupted hollow passage for calculated application of operative treatment on targets without any ill effect on surgeon's eye.

### According to Merriam Webster's Dictionary

Definition: - Real-time: time in which the occurrences of an event and report or recording of it are almost simultaneous

Real-time Adjective: Pertaining to work of computer operation in which the computer collects data computes with it and uses the results to control a process as it happens.

### HOW "SPLITTER" OPERATES:

It provides universal operative tolerance in the form of self centration, self focusing, self searching, self identification, self manipulation and ultimately TOTAL AUTOMATION. Creating apocalyptic change from the world of "assistance" to the world of ultimate "guidance".

| | | |
|---|---|---|
| 1. | Space tolerance | based upon "critical space limits" to constantly generate timeless image. |
| | | |
| 2. | Time tolerance | Allows enough time to operator for "precision point engagement" of object. |
| | | |
| 3. | Operative tolerance | to lead change firmly rooted in present with preconceived directions on chosen space dimensions for required end results. |
| | | |
| 4. | Mirror image symmetry | the phenomenon was discovered by Frank Yang and Lee that the object and mirror image obey the same law and are functionally equivalent in every way. |

| **Difference between system operating in real time and space (splitter) and relative time and space (existing technology** | | | |
|---|---|---|---|
| | **SPLITTER** | | **EXISTING TECHNOLOGY** |
| | (Paradigm of real time and space). | | (World of relative time and. space). |
| 1. | Operate at all times. (Deduction). | 1. | Operate at times. |
| | | | |
| 2. | Operate from centre to periphery. | 2. | Operate from periphery to centre (induction). |
| | | | |
| 3. | World of universal order | 3. | World of orientation. |
| | | | |
| 4. | World of immutable identification. | 4. | World of relative discrimination. |
| | | | |
| 5. | World of process. | 5. | World of proportion. |
| | | | |
| 6. | World of true continuity. | 6. | World of discontinuous continuity. |
| | | | |
| 7. | Needs no observer to confirm every step. | 7. | Requires observer to confirm every operative step. |
| | | | |
| 8. | Dynamic without limits. | 8. | Static, here limits are already set. |
| | | | |
| 9. | World of total evaluation and creation. | 9. | World of analysis and navigation. |
| | | | |
| 10. | Open system can be linked with electronic highway in true time and space. | 10. | Closed, cannot be extended to electronic highway in true time and space. |
| | | | |
| 11. | Continuity is seamless and isometric. Map precedes and exceeds operating territory; there is no chance of overstepping prescribed limits. | 11. | Continuity is disjointed; territory cannot be mapped you need a critical observation not to overstep limits because of invisible continuity. |
| | | | |
| 12. | World of operative directions. | 12. | World of dimensions. |

### HUMAN LIMITATIONS:

Human being can perceive only two space dimensions and operate with one-space dimension (direction).

The earnest desire of a man is to see the total potentiality of an object before entering into the practical world of time and space. Human vision has shown the world that there is a total homogeneity and compatibility between cosmos (outer world) and consciousness (inner world), objectivity and subjectivity, time and space, essence and substance, cause and effect in ascending order but the world do not know how to put these co-ordinates in straight jacket or in non time zone (Atemporal world).

In physics an article operates in partial and incomplete world of analysis where synthesis is almost impossible with unpredictable time and space. In metaphysics an article operates in total world of analysis and synthesis with predictable time and space. In short, the world of analysis shows the mankind what is not possible and world of synthesis shows us what is possible.

**IN PHYSICS HUMAN POTENTIAL ACTUALIZES THE WORLD OF POSSIBILITIES; IN META PHYSICS INHERENT POTENTIAL OF AN OBJECT GUIDES A MAN TO ACTUALIZE POSSIBILITIES.**

When the person moves from relative world to absolute world he moves from translucent world of physics to transparent world of metaphysics.

**THE WORLD OF RELATIVITY IS ONLY CONFINED TO TIME AND SPACE AND THE WORLD OF' REALITY (METAPHYSICS) IS CONFINED TO CAUSE AND EFFECT.**

In the world of "Splitter" there are two reference points of object and its image in universal paradigm. Where an operator is critically poised to see both before and after of sequence and free to choose any easy option to actualize with minimum energy and skill. He is totally free of objective discrimination and subjective evaluation and is not suppose to gear up or gear down his mental visual and manual dexterities according to the pace of change. There is no pressure of pacing time or change on operator, he moves from one visible now to another visible now.

Here entire system is an extension of operator. It is a pure human technology where no familiarization is required. When in temporal world of relative time and space operator is an extension of system where he moves from one obscure now to another obscure now without any concrete knowledge of prevision and future hence he always tries to adopt direction where he feels safe and accustomed.

### ANALYSIS OF RELATIVES WORLD:

1. There are three dimensions of space whereas a man can understand only two dimensions and act in one direction.
2. There are three time zones past, present and future, where future zone is obscure.
3. Accuracy and Speed are new parameters, which are introduced by modern technology.
4. Nature sends down every creation with its own time and space to provide proper measurement, and to inherit back all subtle dimensions in universal paradigm for analysis and synthesis. It is virtually unthinkable to measure the divine creations by man made measuring tools.

### THE INSPIRATION WHICH COMPELLED TO SOLVE THESE PROBLEMS:

1. There is an established phenomenon that in war and game instinct operates faster then conscientious objectivity and experienced subjectivities as if there is a definite zone of "Avariance" or "cosmic landscape" of absolute certainties tied to human vision.
2. "Direction", "Time" and Space are a priori of human vision or human vision is intuitionally linked with direction, time and space.
3. Human vision is "tuned" with direction and "timed" with space.
4. It is always the direction, which keeps time and space in true proportionality (straight jacket).
5. Richest realm of science and technology is the world of "vision" on physical, intellectual and metaphysical planes.

### TURNING POINT OF INSPIRATION:

Lately in all surgical microscopes, "virtual reality" (where partial image of operating microscope is matched with computer generated total image) and "augmented reality" (where total image of computer is projected on partially visible object of microscope) are interfaced with computer through "electronic bidirectionality". Efforts were made to construct "visible bidirectionality" independent of the existing optical system, operating in universal paradigm mutually focused with the existing microscope on the same object to retrieve complete image with same size of the article.

The present microscope operates with the partial image having the following characteristics:
i) Direction is variable.
ii) Time is serial (temporal)
iii) "Whole" cannot be constructed on this image for total analysis.
iv) Human pace will not equate with pace of event, because the image recedes in time and concedes in space.

**WHAT ARE THE. SHORTCOMINGS OF THE MOST DYANCED SURGICAL MICROSCOPES:**
i) Surgical microscope has failed to show progressive parallelism with techniques and operative paraphernalia.
ii) In spite of many claims from the vanguards of technology surgical microscope is still confined to its innate functions of magnification and illumination.
iii) Because of large size it:
   a) Creates mental obstruction
   b) Occupies central position
   c) Hooks human senses
   d) Coagulates human imagination
   e) Addition of accessories per square inch cost around thousands of dollars.
iv) It operates in space world where "Resolution" is distorted in magnification, and magnification is dispersed in relative time and space, what is known in physics juxta position (side by side) here time is embedded in space and space is structurally bound to object, everything is retrospective. Action becomes only objection of attention after it has occurred, that is vision line is restored when action has taken place. It depends upon individual direction to deal with continuously expanding space and extending time.

**THE REASONS FOR CHOSING SURGICALMICROSCOPE AS A "PRIOR ART" OR REFERENCE BACKGROUND OF "SPLITTER":**
1. Because most advanced data matching (virtually reality) and data patching (augmented reality) are used in advanced surgical microscopes to bring total reality in sight but specified accuracy is not guaranteed because the process is structurally bound, unipolar, and the final move is based upon individual judgment of operator.
2. This is the only technology where highly expensive (diamond knives) super sharp, and calibrated instruments arc used and the events unfold so fast that there is no time, to pause, to think, and to act. It has been calculated that negligence of a one fifth of a second that is two hundred microseconds can cause irreparable damage.
3. Any machine (here surgical microscope) that embraces huge cost and intimacy with the surgeon's creativity should work as extension of his soul like subconscious of human consciousness. Predominant reality is surgery not surgical microscope. Technology should streamline human desire and future vision so that surgeon can start, maintain arid regain his operative posture irrespective of his experience, mental pace and operative dexterity.

### HOW THIS PROBLEM IS SOLVED:

1. By creating an optical port.
2. Designing and fabricating an optical device based upon immaculate opto matrix measure by measure, to place existing surgical microscope into semblance by occupying kernel position, to galvanize within and without of attached microscope into state of art, world of functions and configuration and acts as independent brain of whole new complex to provide advanced operative guidance moment by moment of all contemporary and emerging mega trends in the world of evaluation, designing and creativity.

### THE EXISTING FORCES AVAILABLE TO DESIGN "SPLITTER"

1. Visible world and an invisible world show unvarying symmetry and proportionality of real time and space. To advance from visible to invisible world, immutable co-ordinates can be used to operate in universal paradigm.
2. Orthogonality (mutually perpendicular) where every image is universally readable and replicable in the following manner:-
   a) Profile display can be quantified for direct access to all functionality (algorithm) at all time to stabilize objectivity by changing established static process into dynamic "visual bidirectionality" we can defy relative spatio-temporal world and delve, in the error free visible world of predictability as long as desired.
      Because of visual bi-directionality of orthogonality a parallax world of order is created between object and its image (conjugation) to provide predictable directions to create:
      i) environment of visible predictability: when all operative dimensions are present with computer generated visible end results;
      ii) environment of error free technology: when prescribed limits of universal order totally measure and scrutinize spatio-temporal world;
      iii) cutting edge technology; when advanced guiding system help to always at safe and easy location with equally safe and easy operative operations.
   b) With the help of computer the image can be changed from 2D image into 3D image.
   c) The more precise the information, the more exact subsequent analysis and strategies, and more efficient use of operating time.
3. X.Y.Z co-ordinates (parallel perpendiculars) for volumetric and holistic evaluation can isolate, project and transfix an object (fixed example: tumour or free example: precious stones).
4. Resolving power, when surface identification (2D image) is added with third dimension of stereopsis or 3D image. Retrieving of this complete image which I call image that seizes is possible because of absolute homogenization of time and space in symmetrical cone.

### DESIGING AND ADVANTAGES OF "SPLITTER"OF THE INVENTION:

1. It was possible to capture this image through a hollow tube with internal diameter of 4.25 millimetres.
2. Very few optical components are required.
3. A super sharp image is created at low illumination without image loss or dispersion.
4. Better contrast and greater sense of visual depth because of low illumination.
5. Totally separate visual relay system with its own magnification, X.Y translation and focusing system.
6. This optical device acts as a "viable technology and evaluation system". A perfect source of inspiration and innovation where operator can blink but system will not blink.
7. It provides optical port, which accepts all available optional accessories.
8. Here human pace equates with event pace.

### DIMENSIONS OF SPLITTER'S IMAGE

Discovery of this total image, which seizes is a discovery of epic proportion because it is first time revealed to mankind that a person can
1. DISRUPT NEXUS OF CAUSE AND EFFECT
   By changing time and space paradox into parallax where we can work in real time and space. This is the first time that the world will have a system in their hands for total ROBOSURGERY without any human intervention or, a self contained and self controlled robot
2. ISOLATE SUBTLE OPERATIVE FORCES WHICH OPERATE BETWEEN CAUSE AND EFFECT.
3. QUANTIFY OPERATIVE FORCES INTO DEFINABLE DIRECTIONS
4. IT IS THE ONLY SYSTEM WHICH HAS INHERENT POTENTIAL FOR
   a. SELF CENTRATION
   b. SELF FOCUSING
   c. TOTAL AUTOMATION
   d.SELF MANIPULATION
5. Because the person can create "whole" on this image and project it in instant he has permanent axis and permanent view in his hand to anchor relative changes in prescribed limits
6. This image matches and excites the maximum human visual arid mental capacity
7. This image helps designer to design a system, which is organically intimate and inorganically aesthetic. Since orthogonality extends human familiar operative matrix there is every possibility that human mind and machine would merge as self modifying organic system
8. This image provides a network of "electronic co-presence" between machine, operator and outside world to interact in real time.
9. This image brings about apocalyptic shift from the rule base system to system of its own rules where we can enter in future with the map preceding and exceeding operating territory.
10. This image first time in the history has provided us a unique paradigm.
   a. Where we can design self modifying networks
   b. Create chosen experience to behave as you have imagined it should

### BRIEF DESCRIPTION OF DRAWINGS:

Prior art, fabrication of vital parts of "SPLITTER" are so explicitly sketched and implicitly sequenced that there is a comprehensive linkage of figures for progressive SPLITTER'S assembly. Yet brief description of each drawing is given to fulfil the demand of required document.
FIGURE 1 shows 3-D schematic features of three steps magnification microscope along with generated image.
FIGURE 2 electronically controlled navigational microscope for neuro surgery, where image can float from microscope to computer for matching or image can be floated from computer to be super-imposed on eye-piece of microscope to facilitate operating surgeon to review relative and incomplete observation of object.
FIGURE 3 surgeon is reviewing the future surgical plan by examining orthogonally captured image of human cornea.

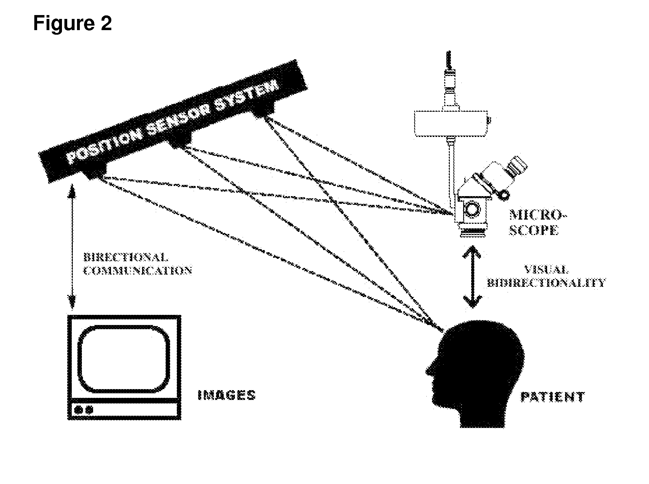

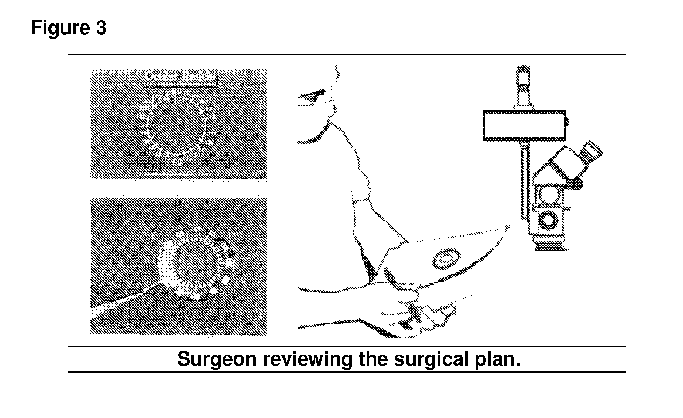

FIGURE 1, 2, 3 are showing existing technologies which were source of inspiration for SPLITTER
FIGURE 4 shows orthogonal visual bi-directionality created by SPLITTER.

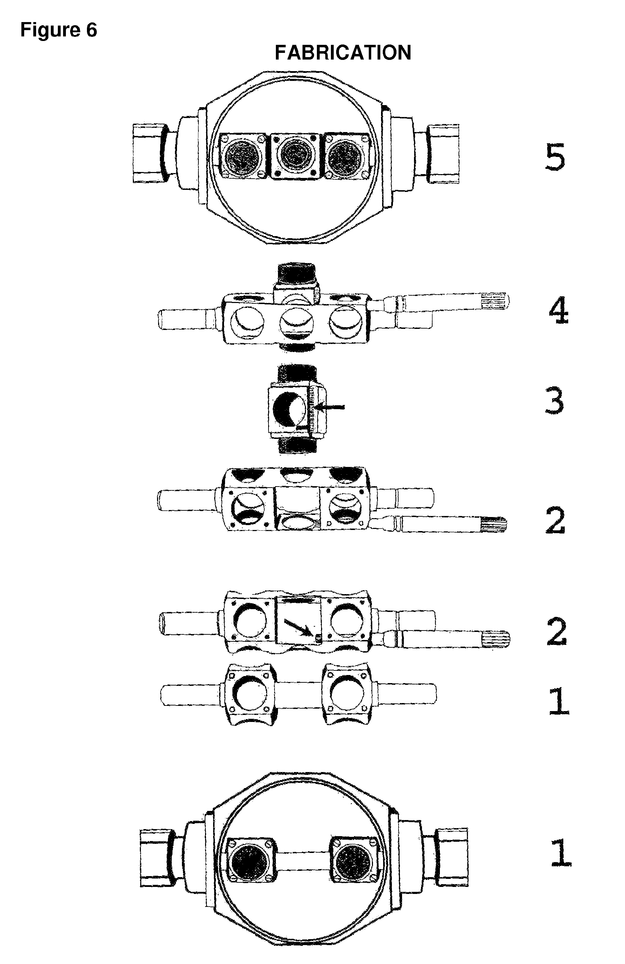

FIGURE 6 "FABRICATION"
   DRAWING 1 shows bottom perspective view of existing three-step magnification microscope with two optical chambers.
   DRAWING 2 shows special lever with micro-gear (as pointed by arrow) designed for SPUTTER, above the lever used in existing microscope.
   DRAWING 3 special optical chamber with micro-gear strip (as pointed by arrow)

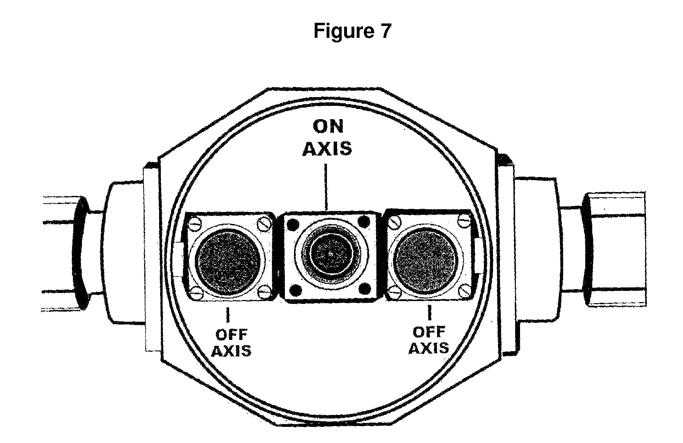

FIGURE 7 shows an on axis optical chamber added between two off axis optical chambers

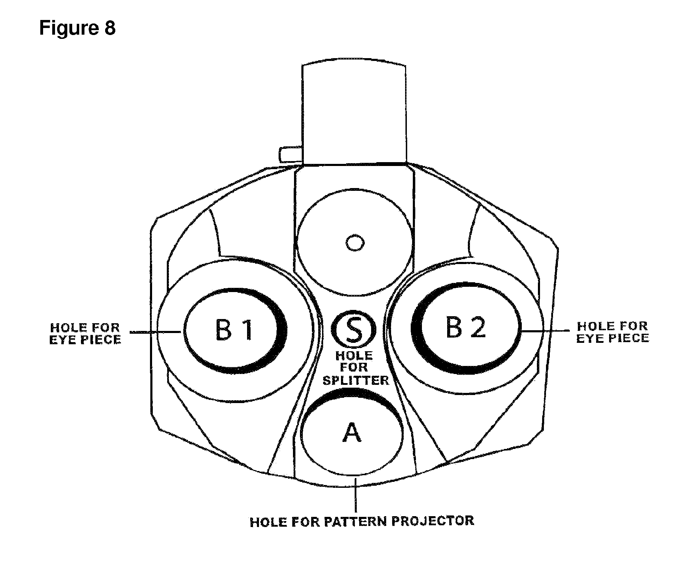

FIGURE 8 top view of microscope showing two already present holes for eyepieces and two additional holes created for SPLITTER (s) and patterns projector (a)

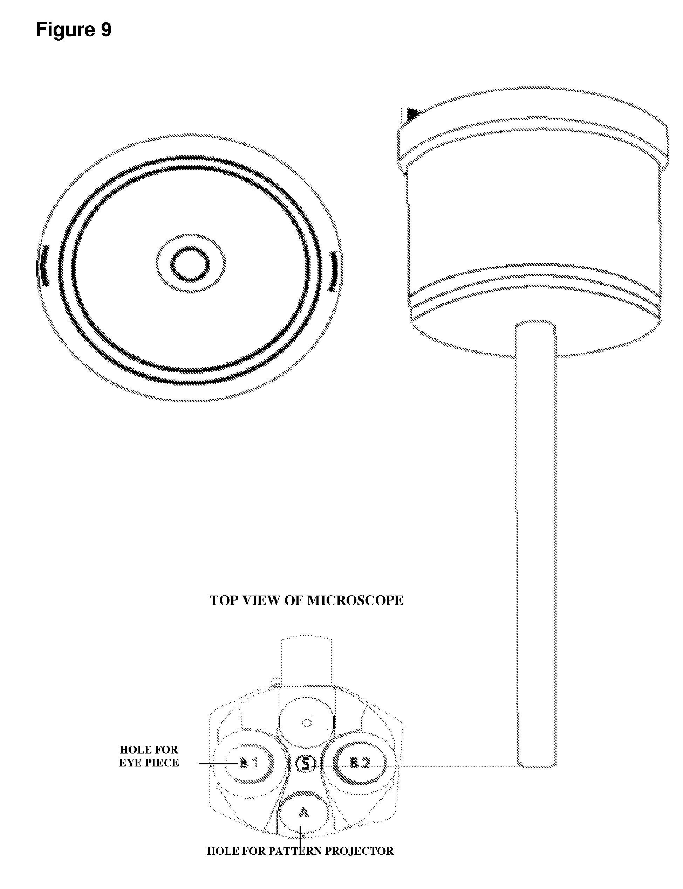

FIGURE 9 SPLITTER, lateral view and top view.

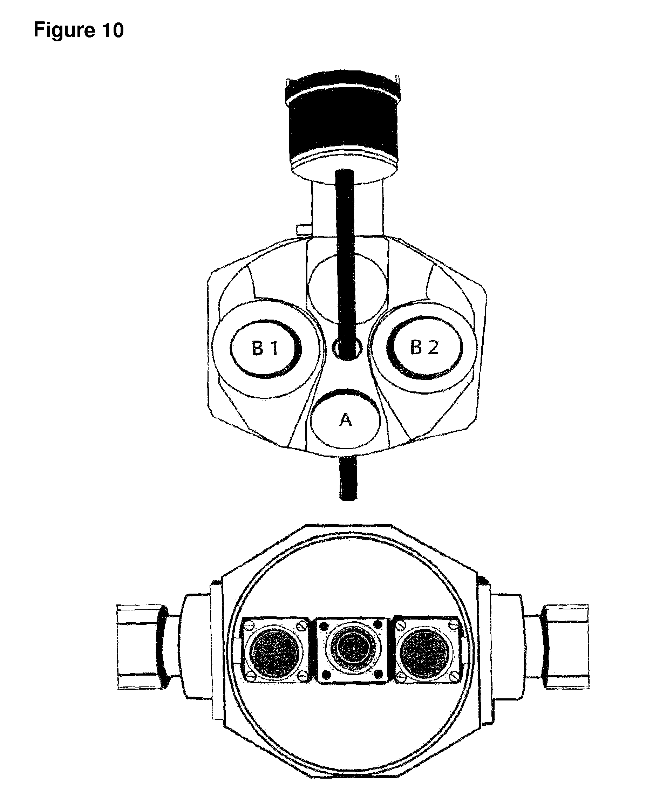

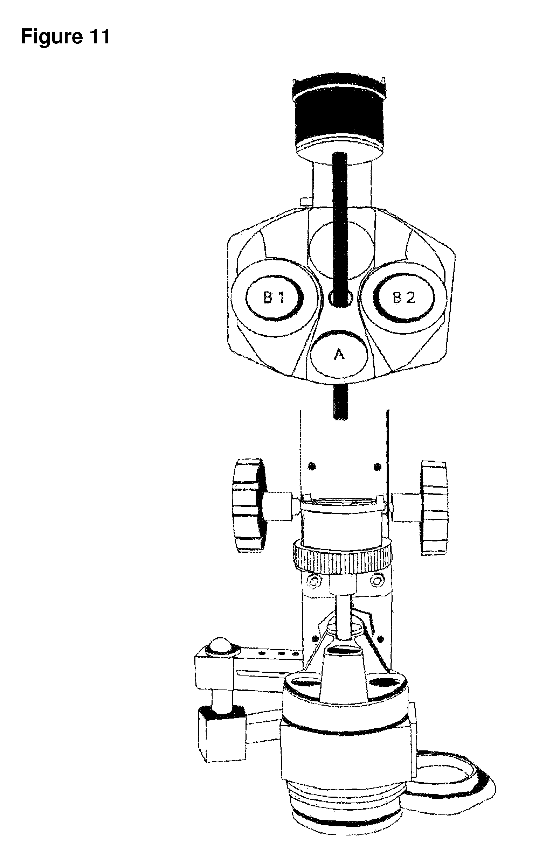

FIGURE 10, 11 shows how SPLITTER is installed in existing microscope

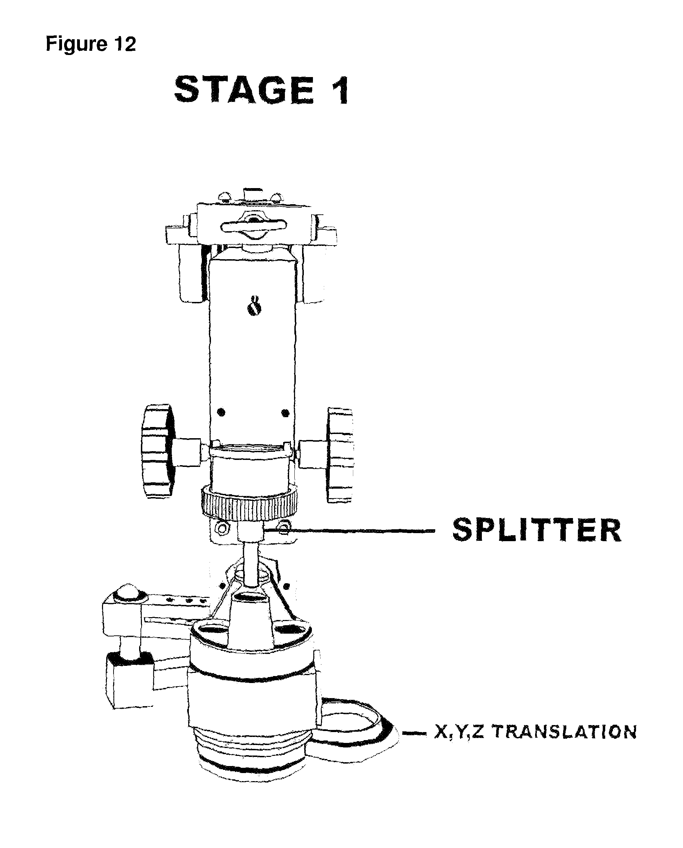

FIGURE 12 SPLITTER in microscope

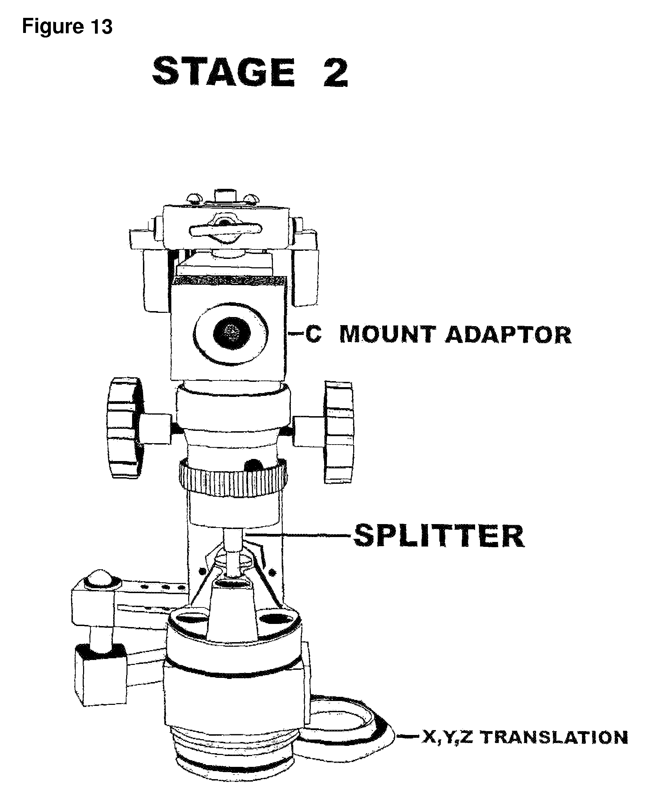

FIGURE 13 C-Mount adapter attached to splitter

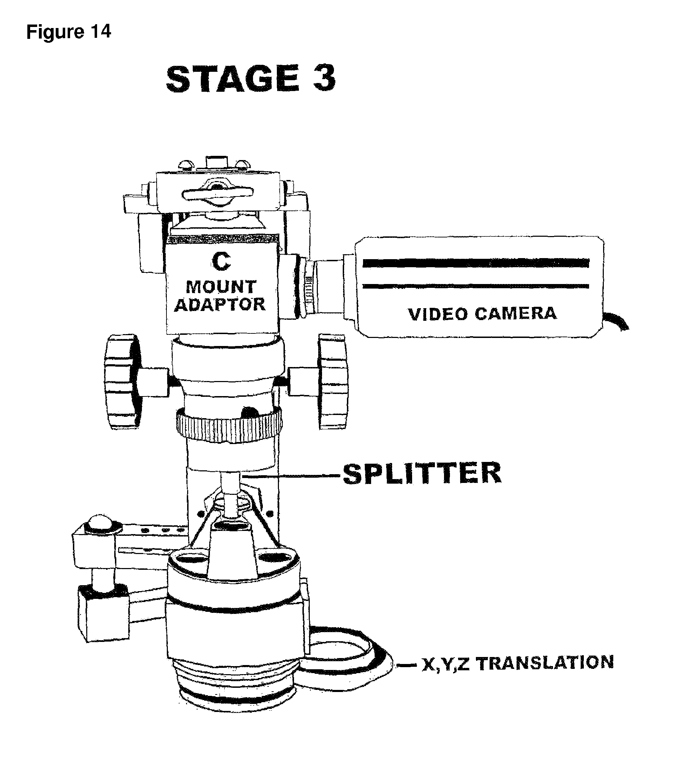

FIGURE 14 video camera attached to C-Mount adapter

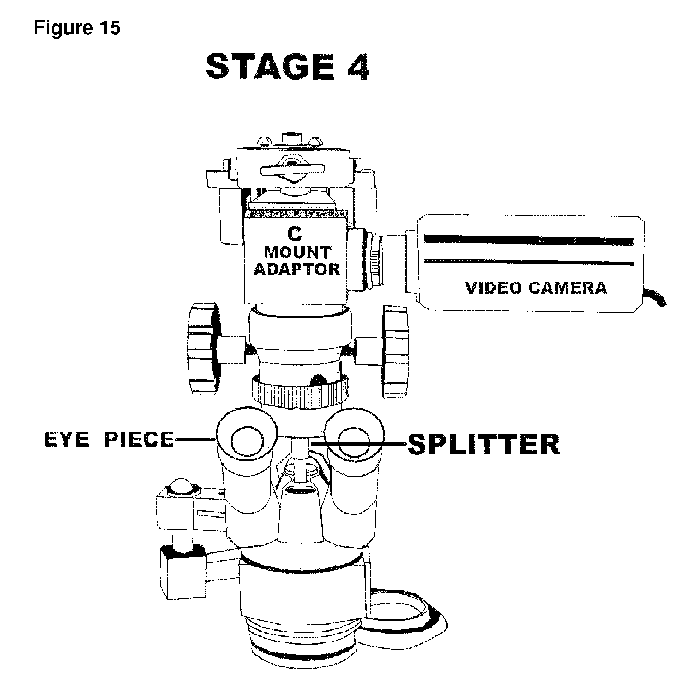

FIGURE 15 eyepieces attached

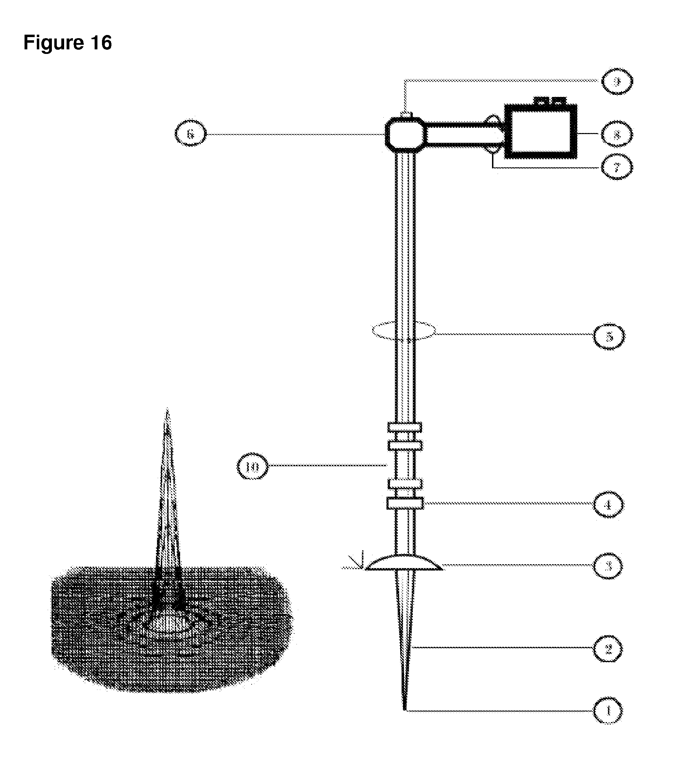

FIGURE 16 schematic presentation of SPLITTER with its unique retrieving image.

### BRIEF DESCRIPTION OF SPLITTER'S OPTICAL COMPONENTS

1. On axis (figure 7)
2. Orthogonal image retrieving system
3. Independent X, Y, Z translation
4. Independent system of fine focusing
5. 360° scanning and alignment system
6. C-Mouth adapter
7. 360° guiding and alignment system
8. Video camera
9. Pattern projector for simple object analysis and operation
10. Central optical beam used for C-Mount adapter or other optional accessories or projection of halogen/xenon lights or laser application or patterns projection

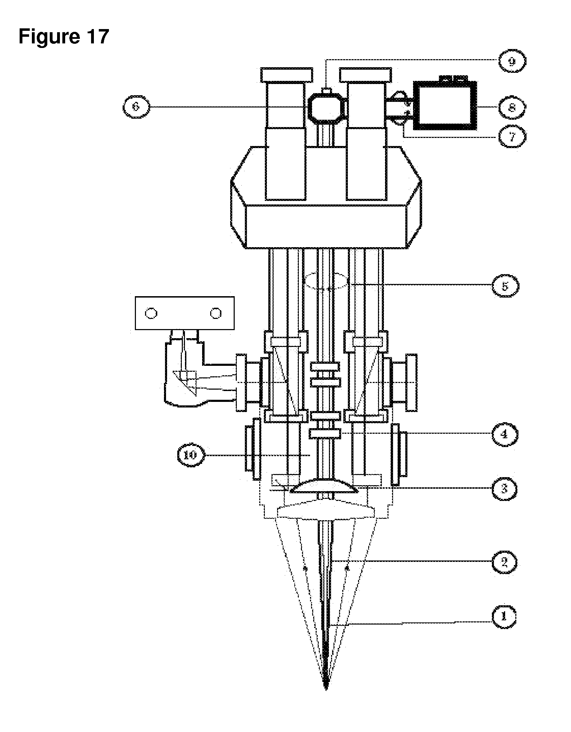

FIGURE 17 schematic presentations of existing microscope with SPLITTER and its necessary attachments

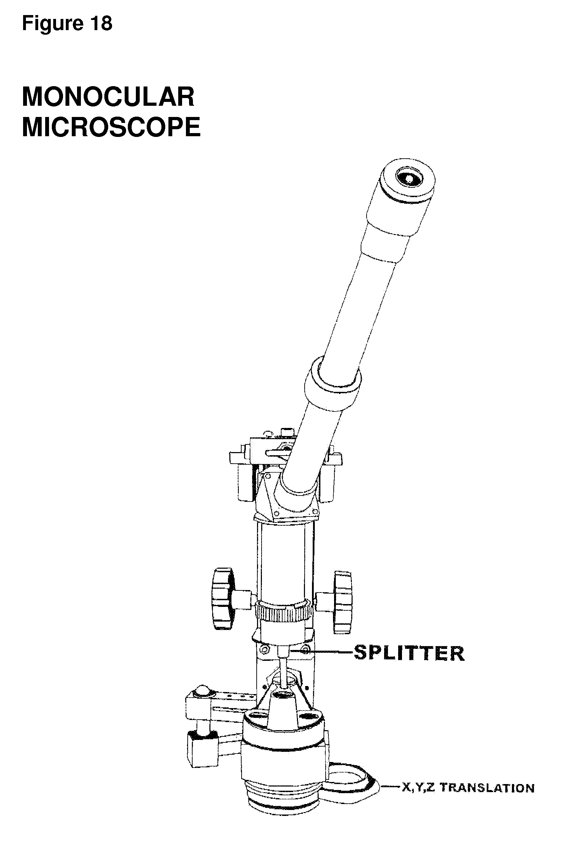

FIGURE 18 Monocular microscopes is shown attached to SPLITTER

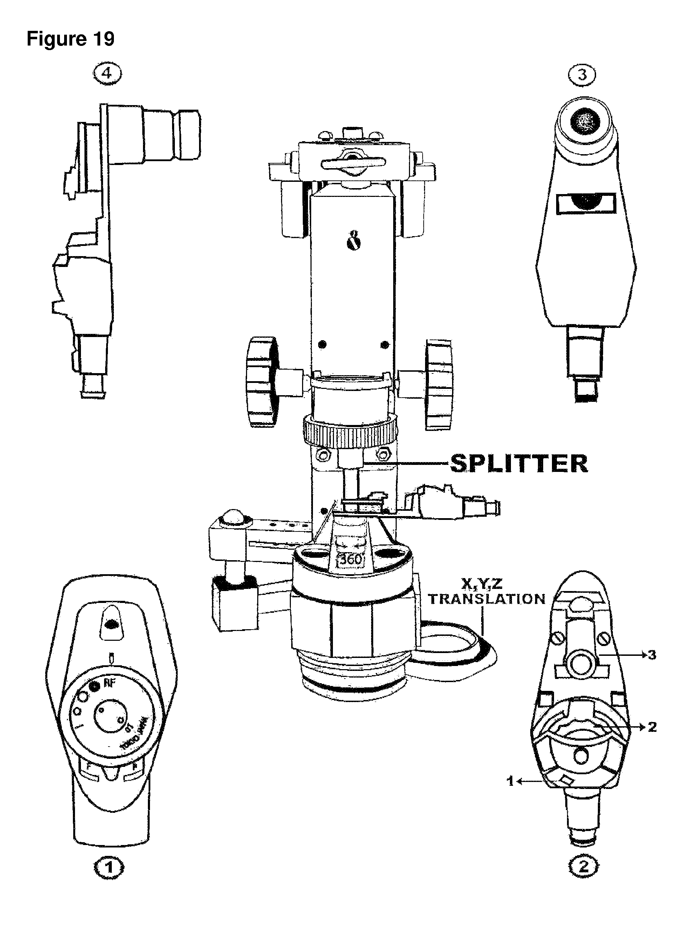

FIGURE 19 shows head of ophthalmoscope with normal patterns used to examine human fundus

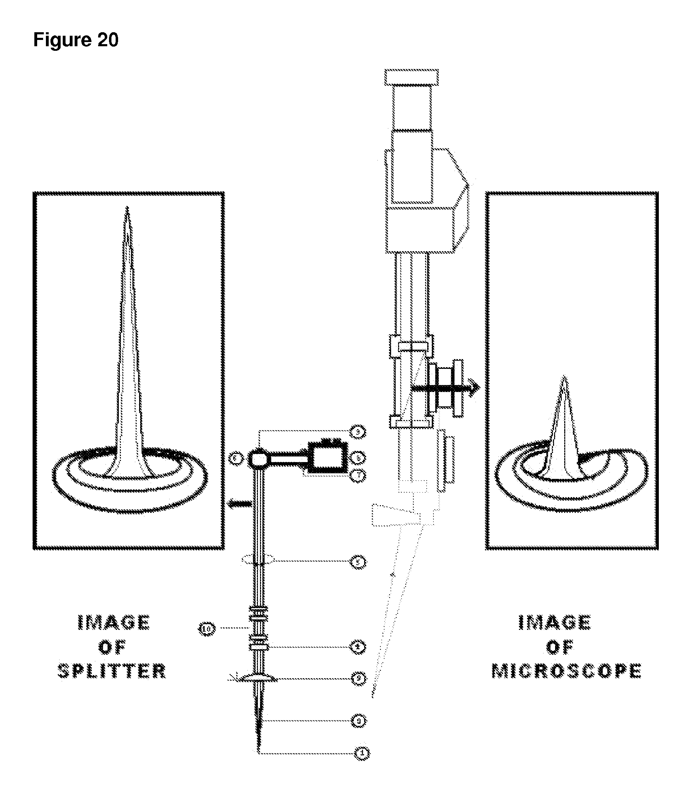

FIGURE 20: Configurational and geometrical analysis of images retrieved through SPLITTER and microscope.

| | |
|---|---|
| The image of SPLITTER | Image of Microscope |
| The real time and space are enfolded evenly in magnification and magnification is symmetrically embedded in resolution. | Relative time and space, magnification and resolution are unevenly juxtaposed (placed side by side). Please also refer to FIG # 23 |

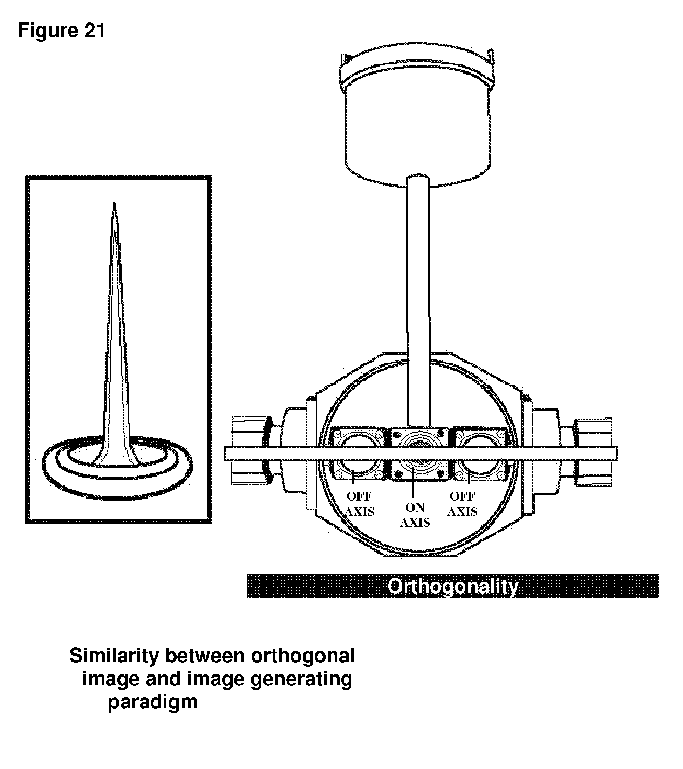

FIGURE 21: Geometrical symmetry between the paradigm of 'orthogonality' and structural relationship of SPLITTER with its unique magnification system and the retrieved image.

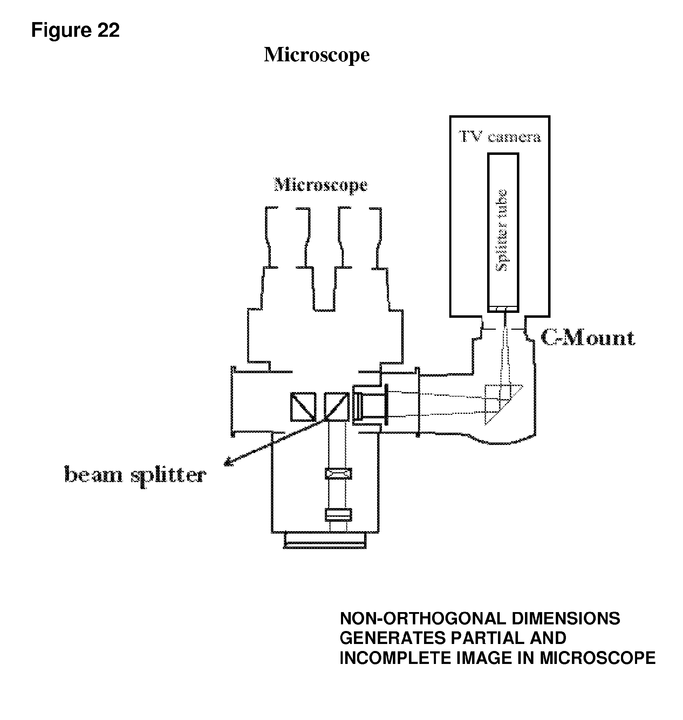

FIGURE 22: Non-orthogonal dimensions generates partial and incomplete image in microscope.

FIGURE 23: How SPLITTER enhances the workability of complimentary technology.
1. **Effectiveness:** comparison is based upon relationship between resolution and magnification.
2. **Size:** SPLITTER can be installed in any small sized microscope without any obstruction in existing structural configuration and functions, SPLITTER rarefies half of the optical parts of microscope used to retrieve image and extends in vertical dimension by accepting any available optical (E.g. binocular microscope) and therapeutic (E.g. laser) accessories. When presently microscopes are extended horizontally (FIG # 24) to make ways for accessories which cost thousands of dollars per sq. inch (reason for low price).

The functional location of orthogonality rarefies many optical parts of microscope for example beam splitter and shifts horizontal extension of accessories into vertical dimensions to keep the size of microscope as small as possible, as if nothing exists between human eyes and object which is one of the prime quality of orthogonality.
Incidentally the relationship of effectiveness is also the prime indicator that how SPLITTER extends the accompanying technology into future.
***Figure 19******:***

### DRAWING 2

1. Lever to change patters
2 Sockets where patterns are framed
3. Prism to direct patterns at right angle

### DRAWING 3 a tube Is attached to the front side of the ophthalmic head (figure 8)

### DRAWING 4 lateral view of pattern projector.

Pattern projector is tapered in conical shape with a purpose to allow inter pupiliary adjustment of eyepieces.

An exclusive X, Y, Z translation is designed to operate mechanically for SPLITTER to increase orthogonal securitization and operative range.

**THE GUIDING PRINCIPALS TO DESIGNS, FABRICATE AND ASSEMBLE "SPLITTER"**

The world of cosmic causality Is far accurate and immutable then the total world of human rationality.

To prove this you have to create "universal paradigm" to operate in advanced error free time zone where inputs (image retrieving) and outputs (operative directions) operate faster then human pace because of high speed video camera and computer.
It is impossible to operate in advanced time zone without proving that metaphysics is a world very much explicable, explainable and explicitly demonstrable in empirical world.

### HISTORY OF SURGICAL MICROSCOPES

In 1921 microscope was first used in ENT
In 1942 microscope was introduced in ophthalmology.
In 1962 microscope was used in neuro surgery.
In 1992 electronically controlled navigational microscope was introduced for neuro surgery.
In 2000, almost eighty years after the introduction of microscope it was realized that as image ascends from "objective" to "eyepiece" it perpetually concedes in space and recedes in time, which distorts magnification and magnification over masks "resolution" which is in reality the essence and true measure of a microscope.

To isolate "resolution" from distortion of magnification and magnification from dispersion in time and space "virtual reality" (VR) and "augmented reality" (AR) were introduced for "precision point engagement" in "critical time limits".

Advance guidance in real time and space" is made possible through this invention when objective reference point operate at orthogonal (space) end to perpetually generate timeless images, retrieved through timeless medium (hollow tube of splitter) for final analysis of object and synthesis of operative directions at subjective reference end (time) by computer to simultaneously visualize total potential of an object (effect) and corresponding operative forces (cause).

Orthogonal dimension of space provides reliable and replicable view of the object in the form of "critical space limits" to prime dimension to retrieve this image in real time to construct total reality (by computer). Total reality then undergoes analysis digitization and synthesis in cyberspace to manifest in predictable operative directions to provide free and easy access, to operate in the world of unpredictable time and space (Spatio temporal world).

Purposely two very advanced technologies are selected, working in "induction" and "deduction" dimensions to demonstrate that shortcomings at the end of these two technologies became blessing in disguise. When immutable dimensions from each technology are ultimately merged to manifest as "splitter".

Electronic bidirectionality of neuro surgical microscope (Figure-2) is changed into "visual bidirectionality" (Figure-4) and "Orthogonality" used in corneal mapping (Figure-3) in ophthalmology is taken to provide universally replicable and readable images.

### SPLITTER:

This can be truly called "sheet anchor" of innovation, which is a seamless tube with head to accommodate multiple accessories.

Seamless length and breadth of has no innovative priorities or scientific values. It was simply an irreconcilable fate that chosen microscope has only 7 mm diameter or safe space to install hollow tube.

Seamlessness, length of tube and internal diameter has no scientific foundations or innovative priorities; tube must conform orthogonal geometry in static mode and capture the very spirit of orthogonal functionality in dynamic mode. Internal diameter should match the smallest aperture of C-mount adopter.
Functions of tube are more mechanical than functional.
I. It provides strength to bear weight of accessories and to keep the optical axis in absolute verticality,
II. To pick up crisp and real image without any optical accessories e.g. beam splitter, at low illumination
III. To protect surgeons eyes if tube is used for xenon light or laser therapy

The internal diameter of the tube is 4.25 millimetre. The outer diameter is 6.5 millimetre.

The seamless hollow tube is a joint-less, en-block, lathe-cut from hard material to provide uniform strength. The joint is intentionally avoided since the joint is a weakest part of a tool and to make a joint it is needed that a thick plate of splitter's head and an extra collar to support the tube and to keep the optical axis in alignment which was not possible without creating hindrance in the smooth alignment and functionality of microscope. In addition, another reason for avoiding the joint is that delicate splitter's tube has to accommodate heavy optional accessories and freely rotate at 360 degrees around its own optical axis. As there was no support was available in the microscope to install the tube, a support in the form of round socket was designed to allow free rotation of tube and to bear weights of optional accessories. A seam less tube is also the basic requirement when precision, critical alignment and aesthetics are the requirements.

It requires only 7 millimetres hole in the centre of the microscope to operate, see figure No.8 - 11.

The length of the tube differs when it is used in zoom microscope or three step magnification microscope. In both these microscopes it occupies "con focal" position• or operates on principal optical axis" to provide three- dimensional universal images readable at all times.

In three-step magnification microscope for splitter to operate on principal optical axis, a separate optical port With movable magnification chamber is designed to concomitantly move with the operating microscope yet with independent focusing, see optical parts No. 1, 2, 3, 4, and S in figure No. 6.

### MAJOR INNOVATIONS CARRIED OUT FOR "SPLITTER":

1. fabricating "central magnification optical chamber" for "on axis" image, see figure No. 6 and 7.
2. to retrieve real image in real time at low illumination without any optical parts through narrow tube (internal diameter 4.25 millimetre) totally matching in size to image of existing microscope, see figure No.8, 9 10 and 11.
3. Patterns projector to help computer in object analysis and operator in operation, see figure No: 19.
4. Elimination of all optical accessories like mon-ocular microscope, bin-ocular microscope, beams splitter etc.
5. Splitter can also be used for patterns projections; halogen light, and xenon light, laser applications alter opening optical port with a lever.

### FORCES THAT KEEP "SPLITTER" IN ADVANCE TIME ZONES: -

1. Orthogonality Keeps changeless "relationship" between object and image because of central magnification optical chamber (Figure No. 7) and splitter (Figure No. 9).
2. An ordinary video camera provides unbroken continuity to "relationship" to furnish true "visuals" (Figure No. 15).
3. Computer analyses these visuals" in operative guidelines (Figure No. 4).
4. Projection of patterns (Figure No. 19) helps computer analysis and operators execution simple, and also completes paradigm of bidirectionality.

### DEFINATIONS OF IMPORTANT TERMS:

1. Whole: This can be totally analyzed and holistically viewed.
2. Real time: When you observe, analyze and act in the same time (instant).
3. Dead time: Gap in the continuity when operator is not working with machine.
4. Induction: When creative impulses come from periphery to centre. (Example: neuro surgical microscope).
5. Deduction: when creative impulses operate from centre to periphery. (Example: operating on map captured orthogonally)
6. Universal paradigm: when you do not have any choice irrespective of your experience but to obey operative directions.
7. Centered optical system; where all refracting and reflecting surfaces have their centre on a common axis and there is complete point, line and plane correspondence between object and image because all travelling rays of image are restricted close to optical axis.
8. Timeless Image: Where you do not require a single space dimension to construct and single time duration to complete the image. -
9. Truth: Transparent without contradiction.
10. Temporal world: Serial world.
11. Atemporal world: Real world / timeless world.
12. Conjugate: Joined in real reciprocal relation, thus if "I" is image of "0" then if "I" is made the object the image would be"0".

## Claims

1. An optical device (Splitter) which is designed to set aside real technology in minor and mega dimensions, liberating output of skill inadequacies, inherent in human nature and structure of machine, by providing advance guidance in real time and space, through universally readable parameters for anticipation and prediction to achieve only perfect state of art preconceived end results, comprising a seamless hollow tube with head to accommodate multiple accessories; which optical device provides universal operative tolerance in the form of self centration, self focusing, self identification, self manipulation and total automation; and can clip images electronically at various distances of real time observations, analysis and guidance for the universal images; and further provides reliable and replicable view of the object in the form of "critical space limits" to prime vertical orthogonal dimension of space and to retrieve this image in real time to construct total reality (by computer) wherein the total reality then undergoes analysis digitization and synthesis in cyberspace to manifest in predictable operative directions and provides free and easy access, to operate in-predictable time and space; and
wherein the seamless hollow tube is en-block, lathe-cut from hard material to provide uniform strength; which seamless tube is purposely made joint-less to avoid use of thick plate of splitter's head and an extra collar, wherein the seamless tube having the internal diameter of 4.25 millimetres and outer diameter is 6.5 millimetres which requires only 7 millimetres hole in the centre of the microscope to operate; and
wherein con focal on axis direction, of orthogonal system, assisted by the Z focusing of microscope provides
a) infinite focusing
b) infinite depth of perception
c) infinite optical proportionality
d) pure resolution; and the length of which tube (Splitter) differs when it is used in zoom microscope or three-step magnification microscope wherein both these microscopes occupy "con focal" position or operates on "principal optical axis" to provide three-dimensional universal images readable at all times.

2. A process for fabricating "central magnification optical chamber" for "on axis" image; comprising making a hole of 7 millimetres in the centre of the microscope and inserting the seamless tube as claimed in claim 1 wherein orthogonality keeps changeless "relationship" between object and image by using central magnification optical chamber and splitter existed as an open space in a hollow tube (Splitter) shifted from outside to inside of the working tool (microscope) wherein further the functional location of orthogonality rarefies many optical parts of microscope for example beam splitter and shifts horizontal extension of accessories into vertical dimensions to keep the size of microscope as small as possible.

3. A method of retrieving image in real time at low illumination without any optical parts through the seamless tube as claimed in claim 1, totally matching in size to image of existing microscope.

4. A three-step magnification microscope with splitter as claimed in claim 1 to operate on principal optical axis, a separate optical port with movable magnification chamber to concomitantly move with the operating microscope with independent focusing.

5. The use of Splitter for patterns projections, halogen light, and xenon light, laser application after opening optical port with a lever

6. The use of optical device (SPLITTER), which can be attached to any working tool used for measurements; examination, critical analysis, operation, production or creation provided the relationship between objects and working tool is orthogonal.

7. An optical device as claimed in claim 1 wherein the free omni-rotation of Splitter on 360 degree of tube in microscope and the rotation of video camera in C-mount adopter provides easy adjustments of direction of image in front of the operator.

8. An optical device as claimed in claim 1 by which the profile display can be quantified for direct access to all functionality (algorithm) at all time to stabilize objectivity by changing established static process into dynamic "visual bidirectionality".

9. An optical device as claimed in claim 1 wherein the use of visual bidirectionality of orthogonality creates parallax world of order between object and its image (conjugation) to provide predictable directions to create:
a) environment of visible predictability: when all operative dimensions are present with computer generated visible end results;
b) environment of error free technology: when prescribed limits of universal order totally measure and scrutinize spatio-temporal world;
c) cutting edge technology: when advanced guiding system help operator to be always at safe and easy location with equally safe and easy operative operations.

10. An optical device as claimed in claim 1 capable of changing the image from 2D to 3D with the help of computer.

11. An optical device as claimed in claim 1 wherein the orthogonality is incorporated with ultimate and fundamental universal forces TIME AND SPACE and helps to operate in real time and space and provides all the time at user's disposal to slow down operative process in self defined ratios (example 1:1, 1:5, 1:10) a to match individual dexterities, experience, fear, right/left hand preferences to deal a situation of micro precision in small spaces; and
wherein orthogonality extends human familiar operative matrix which provides every possibility that human mind and machine would merge as self modifying organic system.

12. An optical device as claimed in claim 1 wherein the orthogonality provides the extended vision that further provides tactical overview of operations without or beyond subject/object dichotomy in which the system is based on orthogonality:
i. SIMPLE: where functions overwhelm the aesthetics and size of the tool;
ii. HUMAN: dimensions of image totally approximate human dynamics;
iii. UNIVERSAL: "speed" and "ease" are provided in small size; and
iv. FUTURISTIC: it extends accompanying technology to operate in future time zone.

13. An optical device as claimed in claim 1 wherein advance guidance in real time and space" is made possible when objective reference point operate at orthogonal (space) end to perpetually generate timeless images and retrieved through hollow tube of splitter (timeless medium) for final analysis of object and synthesis of operative directions at subjective reference end (time) by computer to simultaneously visualize total potential of an object (effect) and corresponding operative forces (cause).

14. An optical device as claimed in claim 1 wherein the seamlessness, length of tube and internal diameter must conform orthogonal geometry in static mode to capture orthogonal functionality in dynamic mode and internal diameter of tube matches the smallest aperture of C-mount adopter; wherein the mechanical functions of tube are:
I. providing strength to bear weight of accessories and to keep the optical axis in absolute verticality;
II. picking up crisp and real image without any optical accessories e.g. beam splitter, at low illumination; and
III. protecting surgeons' eyes if tube is used for xenon light or laser therapy.
